# EUROPEAN PATENT APPLICATION

(11) **EP 3 626 960 A1**
(43) Date of publication of application: **25.03.2020**
(21) Application number: 19196824.7
(22) Date of filing: 11.09.2019
(51) Int. Cl.: F02M 61/16, F02M 61/18

(54) **DIESEL INJECTORS AND METHOD OF MANUFACTURING DIESEL INJECTORS**

(30) Priority: 18.09.2018 GB 201815156
(71) Applicant: Ford Global Technologies, LLC, Dearborn, MI 48126-2738 (US)
(72) Inventor: NEWMAN, Carl, Stephen, Colchester, Essex CO2 8UF (GB); KUDAR, Graham, Michael, Chelmsford, Essex CM3 1SH (GB)
(74) Representative: Haseltine Lake Kempner LLP

(57) **Abstract**

A diesel fuel injector for an internal combustion engine is provided. The diesel fuel injector comprises an injector body, the injector body comprising a first thickness of material, wherein an injection passage for injecting fuel using the fuel injector is formed in the first thickness of material, the injection passage defining an opening through which fuel is sprayed from the injector; and a second thickness of material, wherein the second thickness of material forms an outer surface of the injector body and wherein the second thickness of material extends around the injection passage, spaced apart from the injection passage opening, such that condensation forming on the outer surface of the injector body is positioned away from the opening of the injection passage. A method of manufacturing a diesel fuel injector is also provided.

## Description

### Technical Field

The present disclosure relates to diesel injectors and is particularly, although not exclusively, concerned with diesel injectors with improved corrosion resistance

### Background

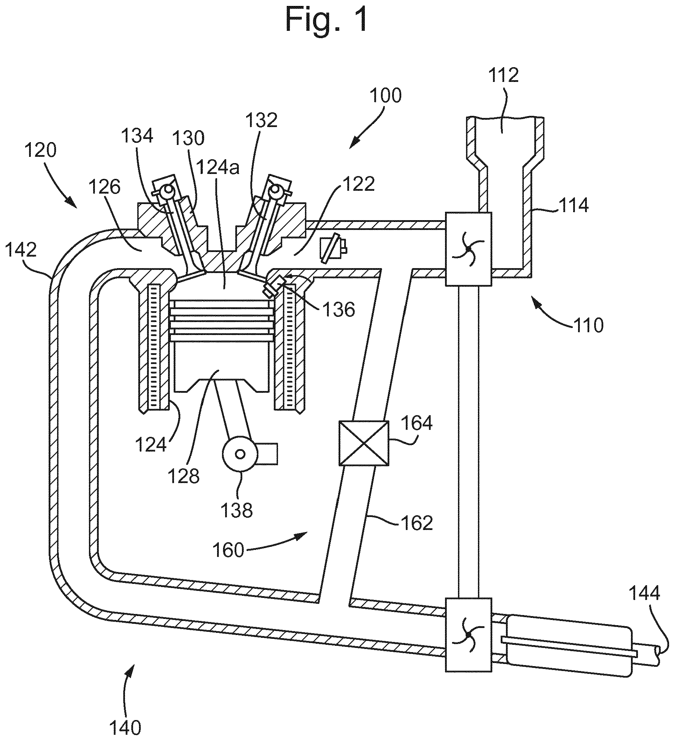

With reference to Figure 1, a diesel engine assembly 100 for a motor vehicle comprises an intake system 110, an engine 120 and an exhaust system 140.

The intake system 110 comprises an air inlet 112 and an intake duct 114. During operation of the engine 120, air is drawn into the intake system 110 via the air inlet 112 and carried to an inlet manifold 122 of the engine 120 by the intake duct 114.

The engine 120 comprises the inlet manifold 122, a cylinder 124 and an outlet manifold 126. A piston 128 is provided within the cylinder 124 and is configured to reciprocate within the cylinder 124 during a combustion cycle of the engine 120. A combustion chamber 124a of the cylinder 124 is defined by one side of the piston 128, the walls of the cylinder 124 and a cylinder head 130.

The engine 120 further comprises one or more inlet valves 132 and one or more exhaust valves 134 to control the flow of inlet and exhaust gases into and out of the cylinder 124 respectively.

During an intake stroke, the piston 128 moves within the cylinder 124 to increase the volume of the combustion chamber 124a, drawing inlet gases from the inlet manifold 122 into the cylinder via the inlet valves 132. Following the intake stroke, the inlet valve 132 is closed and the gases within the cylinder 124 are compressed as the piston 128 moves back towards the cylinder head 130, reducing the volume of the combustion chamber 124a.

Fuel, e.g. diesel fuel, is injected into the cylinder 124 via one or more fuel injectors, such as direct injection fuel injectors 136 and the air and fuel mixture is ignited by virtue of the high pressure and temperature within the combustion chamber 124a. Combustion of the air and fuel mixture produces expanding combustion gases that act against the piston 128 to drive a crank shaft 138 of the engine 120.

The timing with which fuel is injected into the cylinder 124, and the amount of fuel injected relative to the amount of inlet air, may affect the power and/or torque produced by the engine 120. The timing and amount of fuel being injected may also affect the efficiency at which the engine 120 is operation. Additionally, power, torque and/or efficiency of the engine may be affected by the size of droplets of fuel injected into the cylinder 124 by the injector 136, and the extent to which the fuel droplets are dispersed within and mixed with the inlet gases within the combustion chamber 124a.

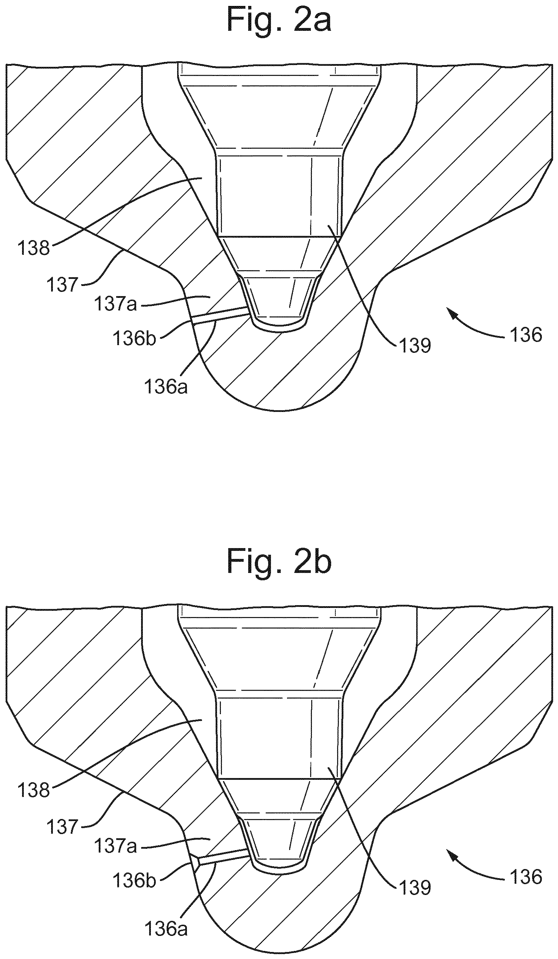

With reference to Figure 2, in order to control the size of the fuel droplets injected by the fuel injector 136, the extent to which the fuel droplet are dispersed, the fuel injector 136 may comprise one or more fuel injection passages 136a that are configured to control the injection of fuel into the cylinder. As depicted, the fuel injection passages extend through a wall 137a of a body portion 137 of the fuel injector into an interior space 138 defined by the body portion 137. Fuel is held within the interior space 138 before being injected into the cylinder 124.

The fuel injector 136 further comprises a needle 139 provided within the interior space 138. The needle 139 is configured to selectively block the injection passage 136a from the interior space 138, in order to control the injection of fuel from the interior space 138 into the cylinder 124.

During an injection event, the needle 139 unblocks the injection passage 136a and pressurised fuel within the interior space 138 passes through the injection passage 136 into the cylinder 124. A diameter and a length of the injection passage 136 are selected such that a desired flow rate of fuel is allowed to flow from the interior space 138 to the cylinder 124 during the injection event.

An opening 136b of the injection passage 136a into the cylinder is shaped such that a spray of fuel is created from the injection passage 136a into the cylinder 124. In particular, a sharp corner, e.g. which is free from chamfers, is formed at the opening 136b. By spraying the fuel from the one or more injection passages 136a of the selected diameter, the size of droplets of fuel within the cylinder and the dispersion of droplets can be controlled as desired.

Returning to Figure 1, during an exhaust stroke of the piston 128, exhaust gases produced through the combustion within the cylinder 124 are exhausted from the cylinder 124 into the exhaust manifold 126 via the exhaust valve 134.

An exhaust duct 142 of the exhaust system 140 is arranged to carry the exhaust gases from the exhaust manifold 124 to an exhaust outlet 144 to be emitted from the vehicle.

The engine assembly 100 may further comprise an Exhaust Gas Recirculation (EGR) system 160. The EGR system 160 comprises an EGR duct 162 configured to recirculate a portion of the exhaust gases to the intake system 110 of the engine assembly 100, e.g. to the intake duct 114 or to the inlet manifold 122. The EGR system 160 further comprises an EGR valve 164 configured to control the flow of exhaust gases through the EGR duct 162.

Replacing a portion of the oxygen rich inlet air within the engine cylinder 124 with burnt exhaust gases reduces the volume of the combustion chamber 124a that is available for combustion. This reduces the peak temperature of combustion, thereby reducing the formation of NO_{X}.

In order to meet emissions requirements, modern engine assemblies are employing increasing amounts of exhaust gas recirculation. In particular, modern engine assemblies typically begin recirculating exhaust gases sooner after the engine has been started, and recirculate a greater amount of the exhaust gases than older engine assemblies.

If a diesel engine is started and subsequently shut down before the engine 120 has been running for a sufficiently long time for the engine to reach a suitable running temperature, condensation can form on the internal surfaces of the engine cylinder 124. In particular, condensation can form on the fuel injector 136.

Due to the increased amount of exhaust gas recirculation being employed sooner after the engine has been started, the condensates that form on the fuel injector can contain increased amounts of acidic compounds from the exhaust gases. As depicted in Figure 2b, the increased acidity of the condensates can lead to corrosion of the openings 136b of the injection passages 136a. As described above, the size and shape of the openings 136b may control the rate at which fuel is injected in to the cylinder 124, and the size and dispersion, e.g. atomisation, of fuel droplets that are injected. Corrosion of the fuel injection openings can therefore lead to reduced performance of the engine in terms of torque and/or fuel economy.

### Statements of Invention

According to an aspect of the present disclosure, there is provided a diesel fuel injector for an internal combustion engine, the diesel fuel injector comprising:
an injector body, the injector body comprising:
a first thickness of material, wherein an injection passage for injecting fuel using the fuel injector is formed in the first thickness of material, the injection passage defining an opening through which fuel is sprayed from the injector; and
a second thickness of material, wherein the second thickness of material forms an outer surface of the injector body and wherein the second thickness of material extends around the injection passage, spaced apart from the injection passage opening.

The first thickness of material may be configured to structurally contain the fuel at an injection pressure of the diesel fuel injector. The first and second thicknesses of material may be integrally formed.

According to another aspect of the present disclosure, there is provided a diesel fuel injector for an internal combustion engine, the diesel fuel injector comprising:
an injector body, the injector body comprising:
a first thickness of material, wherein an injection passage for injecting fuel using the fuel injector is formed in the first thickness of material, the injection passage defining an opening through which fuel is sprayed from the injector; and
a second thickness of material, wherein the second thickness of material forms an outer surface of the injector body and wherein the second thickness of material extends around the injection passage, spaced apart from the injection passage opening, e.g. in a direction perpendicular to a central axis of the injection passage, such that condensation forming on the outer surface of the injector body is positioned away from the opening of the injection passage.

The injector body, e.g. the first thickness of material, may define an interior space of the fuel injector. The second thickness of material may be provided over, e.g. outside of, the first thickness of material, relative to the interior space of the injector body.

The second thickness of material may be positioned on the injector body such that condensation forming on the injector body forms on the second thickness in preference to the first thickness, e.g. at the injection passage opening.

The second thickness of material may be shaped, e.g. around the injection passage opening, such that injection of fuel by the fuel injector is substantially unaffected/unimpeded by the second thickness of material.

The second thickness of material may define a clearance hole extending through the second thickness of material. The clearance hole may be aligned with the injection passage. The clearance hole may have a greater diameter than the injection passage, and may have a greater diameter than a spray of fuel injected via the injection passage, at the position that the spray passes the outer surface of the injector body. In other words, the diameter of the clearance hole may be greater than a diameter of a spray of fuel passing though the clearance hole. The diameter of the clearance hole may be selected based on an angle of the spray of fuel leaving the injection passage and the thickness of the second thickness. In this way, the spray of fuel may be substantially unimpeded or unaffected by the presence of the second thickness of material.

The injection passage and the second thickness of material may together be configured such that performance of the fuel injector is substantially unaffected by corrosion of the outer surface of the injector body.

The first and second thicknesses of material may be integrally formed. The first and second thicknesses of material may be formed from the same material. Alternatively, the first and second thicknesses of material may comprise layers and/or may comprise different materials.

The first and second thicknesses of material may be formed by the same manufacturing process, such as a forging or casting process. Alternatively, the second thickness of material may be formed onto the first thickness of material in a separate manufacturing process, e.g. to a manufacturing process by which the first thickness is formed.

A sharp edge, e.g. free of chamfers and fillets, may be formed at an opening of the injection passage. The sharp edge may be configured such that a spray of fuel is formed by the fuel leaving the opening. A chamfered or filleted edge may be formed at an opening of the clearance hole.

The depth and/or diameter of the injection passage may be configured such that a desired flow rate of fuel can be injected during a fuel injection event. The thickness of the first thickness of material may be equal to the depth of the injection passage.

The second thickness of material may be shaped such that the second thickness is corroded by corrosive condensates forming on the injector body in preference to the first thickness of material, e.g. in preference to the opening of the injector hole in the first thickness.

The fuel injector may further comprise a layer of corrosion resistant material formed on the outer surface of the injector body.

According to an aspect of the present disclosure, there is provided a diesel fuel injector for an internal combustion engine, the diesel fuel injector comprising:
an injector body, the injector body comprising:
a first thickness of material, wherein an injection passage for injecting fuel using the fuel injector is formed in the first thickness of material; and
a second thickness of material, wherein the second thickness of material forms an outer surface of the injector body and wherein the second thickness of material extends around the injection passage formed in the first thickness such that injection of fuel by the fuel injector is substantially unimpeded or unaffected by the second thickness.

Condensation forming on the injector body may thereby form on the second thickness of material, e.g. positioned away from the opening of the injection passage.

According to another aspect of the present disclosure, there is provided a method of manufacturing a diesel fuel injector, the method comprising:
forming an injector body, the injector body comprising a first thickness of material and a second thickness of material, wherein the second thickness of material forms an outer surface of the injector body;
forming an injection passage for injecting fuel using the fuel injector though the first thickness of material;
shaping the second thickness of material, such that the second thickness of material is spaced apart from the injection passage opening.

The second thickness of material may thereby be shaped such that condensation forming on the outer surface of the injector body is positioned away from the opening of the injection passage.

Shaping the second thickness of material may comprise forming a clearance hole though the second thickness of material. The clearance hole may be aligned with the injection passage. The clearance hole may have a greater diameter than a spray of fuel injected via the injection passage where, e.g. at the position that, the spray passes the outer surface of the injector body.

The injection passage may be formed such that a sharp edge is formed at an opening of the injection passage for forming a spray of fuel.

The method may further comprise forming a layer of corrosion resistant material on the outer surface of the injector body.

To avoid unnecessary duplication of effort and repetition of text in the specification, certain features are described in relation to only one or several aspects or embodiments of the invention. However, it is to be understood that, where it is technically possible, features described in relation to any aspect or embodiment of the invention may also be used with any other aspect or embodiment of the invention. For example, features described in relation to the first, second and third aspects may be combined with the features of any of the other aspects.

### Brief Description of the Drawings

For a better understanding of the present invention, and to show more clearly how it may be carried into effect, reference will now be made, by way of example, to the accompanying drawings, in which:
Figure 1 is a schematic view of a diesel engine assembly for a motor vehicle;
Figures 2a and 2b are schematic, sectional views of a previously proposed diesel fuel injector for an engine assembly before and after a period of use within the engine assembly of Figure 1; and
Figures 3a and 3b are schematic, sectional views of a diesel fuel injector, according to the present disclosure, before and after a period of use within the engine assembly of Figure 1; and
Figure 4 is a flow chart illustrating a method of manufacturing a diesel fuel injector according to the present disclosure.

### Detailed Description

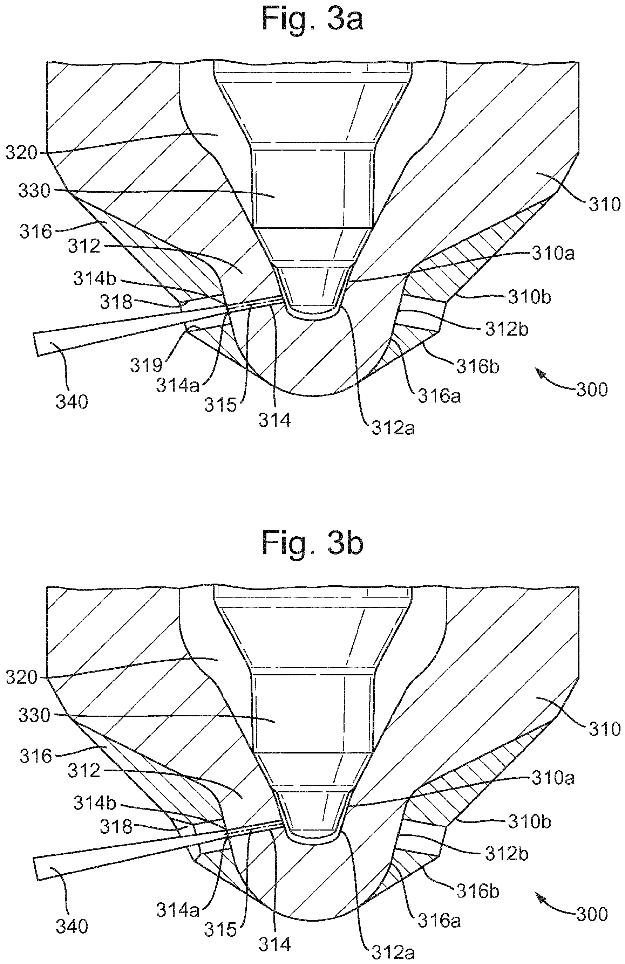

With references to Figures 3a and 3b, a fuel injector, e.g. diesel fuel injector 300, according to arrangements of the present disclosure, comprises an injector body 310 that defines an interior space 320 of the fuel injector in which fuel is held at an injection pressure before being injected. The fuel injector 300 further comprises a needle 330 movable within the interior space to control the operation of the injector 300.

The injector body 310 comprises a first thickness of material 312. The first thickness of material 312 extends outwardly, e.g. relative to the interior space 320, from an inner extent 312a of the first thickness of material to an outer extent 312b of the first thickness of material. The inner extent 312a defines an inner surface 310a of the injector body 310, which at least partially defines the interior space 320 of the fuel injector 300.

A thickness of the first thickness 312 of material, e.g. a dimension defined between the inner and outer extents 312a, 312b of the first thickness 312, may be determined based on the pressure of fuel to be held within the interior space. In particular, the first thickness 312 of material may be configured to structurally contain the fuel at the injection pressure, e.g. without the injector body 310 deforming more than a threshold amount, e.g. according to limits generally accepted in the art of fuel injector design.

An injection passage 314 of the fuel injector 300 is formed though the first thickness 312 of material. The injection passage 314 extends from the interior space 320 to an opening 314a through which fuel can be injected. The opening 314a of the injection passage may be formed at the outer extent 312b of the first thickness of material. The injection passage 314 may be similar to the injection passage 136a described above with reference to Figures 2a and 2b, the features of the injection passage 136a described above may apply equally to the injection passage 314. Further, the injection passage 314 may be configured, e.g. sized and shaped, to be the same as the injection passage 136a, e.g. formed in a fuel injector having the features of the fuel injector 136 described above. The injection passage 136a may be formed so that a diameter and length of the injection passage permit a desirable flow rate of fuel to flow from the interior space 320 to the opening 314a during an injection event. The thickness of the first thickness of material 312 may be equal to the length of the injection passage 314.

Additionally, the opening 314a of the injection passage 314 is formed such that a spray 340 of fuel is projected from the injection passage 314 during the injection event. In particular, as described above, a sharp corner 314b, e.g. free from chamfers and fillets is formed at the opening 314a.

The fuel injector body 310 further comprises a second thickness of material 316. The second thickness of material 316 is formed over the first thickness of material 312. In other words, the second thickness of material 316 is formed outwardly of the first thickness of material 312 relative to the interior space 320. As shown, the second thickness of material 316 extends, e.g. outwardly, from an inner extent of the second thickness of material 316a, which is formed at or directly adjacent to, e.g. in contact with, the outer extent of the first thickness of material 312b, to an outer extent of the second thickness of material 316b. The outer extent of the second thickness of material 316b forms at least part of an outer surface 310b of the injector body 310.

As depicted in Figure 3a, the second thickness of material 316 extends around the opening 314a of the injection passage 314 and is spaced apart from the opening 314a. In particular, the second thickness of material 316 is spaced apart from the opening 314a of the injection passage 314 in a direction perpendicular to a central axis 315 of the injection passage 314 at the outer extent 312b of the first thickness of material 312.

The second thickness of material may be shaped, e.g. around the injection passage opening, such that injection of fuel by the fuel injector is substantially unimpeded by the second thickness. In some arrangements, the second thickness of material may be shaped such that the injection of fuel by the fuel injector is substantially unaffected, e.g. unaffected, by the presence of the second thickness of material. For example, the second thickness of material 316 may define a clearance hole 318 extending through the second thickness of material. The clearance hole 318 may be aligned within the injection passage 314 and the clearance hole 318 may have a greater diameter than the injection passage. Hence, surfaces 319 defining the clearance hole 318 are spaced apart from the opening 314a in a radial direction of the injection passage.

In the arrangements depicted in Figure 3a, the clearance hole 318 is substantially circular in cross-section. However, in other arrangements, the clearance hole 318 may be any other shape, such as square, triangular or hexagonal in cross-section. Furthermore, the cross-sectional shape of the clearance hole may change along the length of the clearance hole, e.g. between the inner and outer extents 316a, 316b of the second thickness of material.

The clearance hole 318 may be sized and shaped such that the spray 340 of fuel injected through the injection passage is not impeded by the clearance hole 318, e.g. such that the spray 340 of fuel injected through the injection passage doesn't impinge on the surfaces 319 defining the clearance hole. For example, the clearance hole 318 may have a diameter equal to or greater than a diameter of the spray 340 where, e.g. at the position that, the spray passes the outer surface 310b of the injector body

With reference to Figure 3b, if condensation forms on the inside surfaces of the cylinder 124 during operation of the engine assembly, condensation may form on the outer surface 310b of the fuel injector body 310. Condensation may therefore form on the second thickness of material 316. As shown in Figure 3b, the second thickness of material 316 may become corroded due to the present of acidic condensation forming on the second thickness of material. In particular, the clearance hole 318 may be corroded. In some arrangements, the second thickness of material 315 may be shaped to encourage condensation to form on the second thickness of material 316, e.g. the outer surface 310b of the injector body 310 formed by the second thickness of material. A suitable shape to achieve this affect may be determined through experiment, e.g. by forming a fuel injector body having a particular shape and observing where condensation forms, or where the fuel injector body becomes corroded. Alternatively, the suitable shape may be determined through computer simulation, e.g. of the formation of condensation.

As described above, the injection passage 314 is formed in the first thickness of material 312, and the second thickness of material is spaced apart from the opening 314a of the injection passage 314. Hence, condensation may not form at the opening 314a of the injection passage 314. The shape of the opening 314a of the injection passage may therefore be unaffected following corrosion of the outer surface 310a of the injector body 310. In particular, the sharp corner at the opening 314 of the injection passage 316 may be maintained. Furthermore, because the clearance hole 318 has a greater diameter than the injection passage 314, the position at which condensation can form on the outer surface of the second thickness is further from the central axis of the injection passage than an edge of the opening of the injection passage. Hence, corrosion of the injection passage may be reduced. Deterioration in the performance of the injector 300 due to corrosion of the outer surface 310b may therefore be reduced. In some arrangements, performance of the injector 300 may be substantially unaffected following corrosion of the outer surface 310b.

In the arrangement shown in Figures 3a and 3b, the first and second thicknesses of material 312, 316 are formed from the same material. The first and second thicknesses of material 312, 316 are integrally formed. Furthermore, the first and second thicknesses of material may be formed through the same manufacturing process. For example, the injector body 310 including the first and second thicknesses of material 312, 316 may be formed through a casting or forging process.

In alternative arrangements, the first and second thicknesses of material 312, 316 may comprise layers of the same or different materials, which may be formed by different manufacturing steps. For example, the first thickness of material 312 may be formed using a first manufacturing process, and the second thickness of material 316 may be formed over the first thickness of material 312 using a second manufacturing process. The second thickness of material may be formed from a corrosion resistant material. In other arrangements, a coating or corrosion resistant material may be applied to the outer surface of the injector body, e.g. at the outer extent of the second thickness of material 316b.

The fuel injector 300 may be installed within an engine assembly, such as the engine assembly 100 shown in Figure 1, in place of the fuel injectors 136. Although in Figure 1 a single cylinder 124 is shown, the engine 120 may comprise any number of cylinders, such as 2, 3, 4, 6, 8 or more than 8 cylinders. Each of the cylinders 124 may have one or more fuel injectors 300 associated with it.

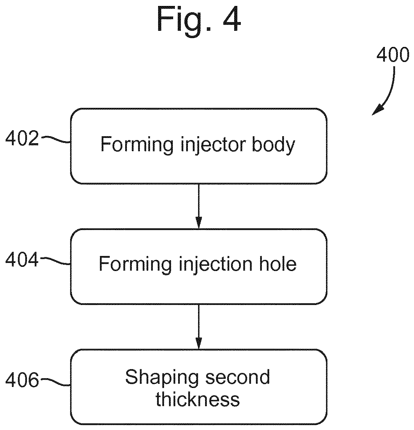

With reference to Figure 4, the diesel injector 300 may be manufactured according to a method 400. The method 400 comprises a first step 402 in which the injector body 310 is formed. In particular, the injector body, e.g. the first and second thicknesses of material 312, 316 forming the injector body 310 may be formed using a casing or forging process. In other words, the first and second thicknesses of material 312, 316 may be formed by the same manufacturing process. In some arrangements, the outer surface 310b of the injector body 310 may be formed, e.g. shaped, using a machining process, e.g. a Computer Numerical Control (CNC) machining process. For example, the outer surface 310b may be shaped using a milling process or an Electrical Discharge Machining (EDM) process, such as a spark erosion process.

The method 400 may further comprise a second step 404, in which the injection passage 314 for injecting fuel using the fuel injector is formed though the first thickness of material. The injection passage 314 may be formed using a machine process, e.g. a CNC machining process. For example, the injection 314 hole may be formed using a milling process or an EDM process, such as a spark erosion process.

The injection passage 314 may be formed such that a sharp edge, e.g. an edge free from chamfers and fillets, is formed at the opening 316 of the injection passage. As described above, the sharp edge may be suitable for facilitating a spray for fuel being projected from injection passage 314.

The method 400 may further comprise a third step 406, in which the second thickness of is shaped such that the second thickness of material is spaced apart from the opening 314a of the injection passage, e.g. in a radial direction of the injection passage 314. Additionally, the second thickness of material 316, e.g. the outer extent 316b of the second thickness of material, may be shaped in order to encourage condensation to form on the outer surface 310b. As described above, condensation forming on the outer surface 310b of the injector body is thereby positioned away from the opening 314a of the injection passage.

The second thickness of material 316 may be shaped using any of the machining processes mentioned above for forming the injection passage 314. For example, the second thickness of material 316 may be shaped using a CNC spark erosion process. In some arrangements, the second thickness of material 316 may be shaped using the same manufacturing process used to form the injection passage 314. Furthermore in some arrangements, the second thickness of material 316 may be shaped at the same time, e.g. during the same manufacturing stage, as the injection passage 314 is formed. For example, the second thickness of material 316 may be shaped and the injection passage 314 may be formed using a single spark erosion process.

Alternatively, the second thickness of material 316 may be shaped and the injection passage may be formed using separate manufacturing steps and/or processed. For example, the second thickness of material 316 may be shaped subsequently to the injection passage 314 being formed, or the injection passage 314 may be formed subsequently to the second thickness of material 316 being shaped.

If the second thickness is shaped subsequently to the injection passage being formed, the second thickness of material may be shaped such that the length of the injection passage is a desired length, e.g. in order to provide a desired flow rate of fuel during an injection event, and such that the sharp edge is formed at the opening 316 of the injection passage. In some arrangements, the sharp edge may be formed during shaping of the second thickness of material.

In some arrangements, shaping the second thickness of material may comprise forming the clearance hole 318 though the second thickness of material.

The method may comprise a further step is which a layer of corrosion resistant material is formed on the outer surface of the injector body, e.g. over the outer extent 316b of the second thickness of material.

The following additional, numbered statements of invention are also included within the specification and form part of the present disclosure:
Statement 1. A diesel fuel injector for an internal combustion engine, the diesel fuel injector comprising:
   an injector body, the injector body comprising:
   a first thickness of material, wherein an injection passage for injecting fuel using the fuel injector is formed in the first thickness of material, the injection passage defining an opening through which fuel is sprayed from the injector; and
   a second thickness of material, wherein the second thickness of material forms an outer surface of the injector body and wherein the second thickness of material extends around the injection passage, spaced apart from the injection passage opening, such that condensation forming on the outer surface of the injector body is positioned away from the opening of the injection passage.
Statement 2. The diesel fuel injector of statement 1, wherein the second thickness of material defines a clearance hole extending through the second thickness of material, the clearance hole being aligned with the injection passage, the clearance hole having a greater diameter than a spray of fuel injected via the injection passage when the spray passes the outer surface of the injector body.
Statement 3. The diesel fuel injector of statement 1 or 2, wherein the injection passage and the second thickness of material are together configured such that performance of the fuel injector is substantially unaffected by corrosion of the outer surface of the injector body.
Statement 4. The diesel fuel injector of any of the preceding statements, wherein the first and second thicknesses of material are integrally formed.
Statement 5. The diesel fuel injector of any of the preceding statements, wherein the first and second thicknesses of material are formed from the same material.
Statement 6. The diesel fuel injector of any of the preceding statements, wherein the first and second thicknesses of material are formed by the same manufacturing process
Statement 7. The diesel fuel injector of any of the preceding statements, wherein a sharp edge is formed at an opening of the injection passage.
Statement 8. The diesel fuel injector of any of the preceding statements, wherein the depth and/or diameter of the injection passage is configured such that a desired flow rate of fuel can be injected during a fuel injection event.
Statement 9. The diesel fuel injector of any of the preceding statements, wherein the thickness of the first thickness of material is equal to the depth of the injection passage.
Statement 10. The diesel fuel injector of any of the preceding statements, wherein the second thickness of material is shaped such that the second thickness is corroded by corrosive condensates forming on the injector body in preference to the first thickness of material.
Statement 11. The diesel fuel injector of any of the preceding statements, wherein the second thickness of material is shaped such that injection of fuel by the fuel injector is substantially unimpeded by the second thickness.
Statement 12. A method of manufacturing a diesel fuel injector, the method comprising:
   forming an injector body, the injector body comprising a first thickness of material and a second thickness of material, wherein the second thickness of material forms an outer surface of the injector body;
   forming an injection passage for injecting fuel using the fuel injector though the first thickness of material;
   shaping the second thickness of material, such that the second thickness of material is spaced apart from the injection passage opening and condensation forming on the outer surface of the injector body is positioned away from the opening of the injection passage.
Statement 13. The method of statement 12, wherein shaping the second thickness of material comprises forming a clearance hole though the second thickness of material, the clearance hole being aligned with the injection passage, the clearance hole having a greater diameter than a spray of fuel injected via the injection passage when the spray passes the outer surface of the injector body.
Statement 14. The method of statement 12 or 13, wherein the injection passage is formed such that a sharp edge is formed at an opening for the injection passage for forming a spray of fuel.
Statement 15. The method of any of statements 12 to 14, wherein the method further comprises forming a layer of corrosion resistant material on the outer surface of the injector body.

It will be appreciated by those skilled in the art that although the invention has been described by way of example, with reference to one or more exemplary examples, it is not limited to the disclosed examples and that alternative examples could be constructed without departing from the scope of the invention as defined by the appended claims.

## Claims

1. A diesel fuel injector for an internal combustion engine, the diesel fuel injector comprising:
an injector body, the injector body comprising:
a first thickness of material, wherein an injection passage for injecting fuel using the fuel injector is formed in the first thickness of material, the injection passage defining an opening through which fuel is sprayed from the injector; and
a second thickness of material, wherein the second thickness of material forms an outer surface of the injector body and wherein the second thickness of material extends around the injection passage, spaced apart from the injection passage opening, such that condensation forming on the outer surface of the injector body is positioned away from the opening of the injection passage.

2. The diesel fuel injector of claim 1, wherein the second thickness of material defines a clearance hole extending through the second thickness of material, the clearance hole being aligned with the injection passage, the clearance hole having a greater diameter than a spray of fuel injected via the injection passage when the spray passes the outer surface of the injector body.

3. The diesel fuel injector of claim 1 or 2, wherein the injection passage and the second thickness of material are together configured such that performance of the fuel injector is substantially unaffected by corrosion of the outer surface of the injector body.

4. The diesel fuel injector of any of the preceding claims, wherein the first and second thicknesses of material are integrally formed.

5. The diesel fuel injector of any of the preceding claims, wherein the first and second thicknesses of material are formed from the same material.

6. The diesel fuel injector of any of the preceding claims, wherein the first and second thicknesses of material are formed by the same manufacturing process

7. The diesel fuel injector of any of the preceding claims, wherein a sharp edge is formed at the opening of the injection passage.

8. The diesel fuel injector of any of the preceding claims, wherein the depth and/or diameter of the injection passage is configured such that a desired flow rate of fuel can be injected during a fuel injection event.

9. The diesel fuel injector of any of the preceding claims, wherein the thickness of the first thickness of material is equal to the depth of the injection passage.

10. The diesel fuel injector of any of the preceding claims, wherein the second thickness of material is shaped such that the second thickness is corroded by corrosive condensates forming on the injector body in preference to the first thickness of material.

11. The diesel fuel injector of any of the preceding claims, wherein the second thickness of material is shaped such that injection of fuel by the fuel injector is substantially unimpeded by the second thickness.

12. A method of manufacturing a diesel fuel injector, the method comprising:
forming an injector body, the injector body comprising a first thickness of material and a second thickness of material, wherein the second thickness of material forms an outer surface of the injector body;
forming an injection passage for injecting fuel using the fuel injector though the first thickness of material;
shaping the second thickness of material, such that the second thickness of material is spaced apart from the injection passage opening and condensation forming on the outer surface of the injector body is positioned away from the opening of the injection passage.

13. The method of claim 12, wherein shaping the second thickness of material comprises forming a clearance hole though the second thickness of material, the clearance hole being aligned with the injection passage, the clearance hole having a greater diameter than a spray of fuel injected via the injection passage when the spray passes the outer surface of the injector body.

14. The method of claim 12 or 13, wherein the injection passage is formed such that a sharp edge is formed at an opening for the injection passage for forming a spray of fuel.

15. The method of any of claims 12 to 14, wherein the method further comprises forming a layer of corrosion resistant material on the outer surface of the injector body.
